Europäisches Patentamt

European Patent Office

Office européen des brevets

(11) Veröffentlichungsnummer: **0 004 093**
**A1**

## (12) EUROPÄISCHE PATENTANMELDUNG

(21) Anmeldenummer: 79100740.4

(22) Anmeldetag: 12.03.79

(51) Int. Cl.²: **A 21 C 3/08**
**B 29 C 17/00**

(30) Priorität: 10.03.78 FI 780769

(43) Veröffentlichungstag der Anmeldung:
19.09.79 Patentblatt 79/19

(84) Benannte Vertragsstaaten:
BE CH DE FR GB IT LU NL SE

(71) Anmelder: Tamminen, Teijo Teuvo Tapio
Julkujärvi
39160 Ylöjärvi(FI)

(72) Erfinder: Tamminen, Teijo Teuvo Tapio
Julkujärvi
39160 Ylöjärvi(FI)

(74) Vertreter: Späth, Helmut, Dipl.-Phys. Dr. rer. nat. et al,
Max-Josefs-Platz 6
D-8200 Rosenheim(DE)

(54) Maschine zum Flechten und Auslegen von zopfartigen Weissbrotgebäcken.

(57) Maschine zum Flechten und Auslegen von zopfartigen Weissbrotbackwaren.

Wesentlich hierfür sind zumindest zwei phasenverschoben zueinander rotierende Führungstrichter (19) für je einen vorangehend hergestellten Teigstrang, wobei die Trichterauslässe (21) exzentrisch zu den Rotationsachsen verlaufen.

Die Teigstränge werden zwischen einer Strangpresse und dem Führungstrichter mittels Förderbänder die zur Ausführung einer Förderbewegung in Längsrichtung und zur Ausführung einer Stetigen hin- und hergehenden Querbewegung ausgebildet sind, geführt.

Die aus den Trichterauslässen austretenden Teigstränge werden auf ein Förderband (22) abgelegt und weisen beriets die gewünschte Flechtstruktur auf. Durch Veränderung der Drehzahlen der Trichter, deren Abstände, der Vorschubgeschwindigkeit des das Flechtgebilde aufnehmenden Förderbandes und dergleichen können die Parameter des Flechtgebildes nach Wunsch in weiten Grenzen verändert werden.

EP 0 004 093 A1

./...

Fig. 3

Teijo Teuvo Tapio Tamminen, Finnland

- 1 -

Beschreibung

Die vorliegende Erfindung bezieht sich auf eine Maschine zum Flechten und Auslegen von zopfartigen Weissbrotgebäcken, welche eine Strangpresse oder entsprechende Einrichtung zur Erzeugung von mindestens einem Teigstrang aufweist und welche mit Mitteln zum Befördern, Flechten und Auslegen dieser Teigstränge in geflochtener Form auf einem Förderband oder ähnlicher Einrichtung versehen ist.

Geflochtene Weissbrotgebäckarten sind sehr verbreitete Bäckereiprodukte, da sie wegen ihrer schönen Form beliebt sind. Diese Gebäckarten werden bis heute fast alle durch Handarbeit gefertigt, da es bisher nicht gelungen ist, eine voll geeignete Maschine zu diesem Zweck zu entwickeln.

Es sind bereits früher Maschinen bekannt geworden, welche zur Fertigung von geflochtenen Weissbrotgebäckarten aus drei oder mehreren Teigsträngen eingesetzt werden sollten. Bei diesen Maschinen werden die Teigstränge durch eine Strangpresse geformt, und die Düsen dieser Strangpresse weisen eine solche gemeinsame Bewegung auf, dass als Ergebnis dieser Bewegung eine geflochtene, zopfartige Teigstrangkombination erzeugt wird, welche dann zur Weiterbeförderung für folgende Arbeitsoperationen, wie z.B. Trennen in Stücke bestimmter Länge, Schmieren, Backen usw., auf einem sich unterhalb der Düsen bewegenden Förderband ausgelegt wird. Ein Ausführungsbeispiel einer solchen Maschine ist unter anderem in der DE-OS 2 161 039 dargestellt.

Teijo Teuvo Tapio Tamminen, Finnland

- 2 -

Diese Maschinen haben jedoch den Nachteil, daß der Flechtmechanismus sehr kompliziert und störungsempfindlich ist. Die unvermeidliche Reinigung der Maschinenteile und besonders des Düsenmechanismus ist beschwerlich und zeitraubend. Die Qualität der durch die Düsen ausgepressten Teigstränge wird oft ungleichmässig, und zwar infolge deren unebener und zerrissener Oberfläche, da der Teig gern an der Innenoberfläche der Düsen kleben bleibt. Daher wird das Ergebnis oft schlecht. Es wäre oft vorteilhaft und notwendig, die Teigstränge zwischen dem Strangpress- und Flechtvorgang etwas zu bearbeiten. Dies ist jedoch bei jetzigen bekannten Maschinen nicht möglich.

Die Erfindung bezweckt, eine verbesserte Maschine für die eingangs erwähnte Aufgabe zu schaffen, wobei die genannten Nachteile beseitigt werden können.

Die Maschine gemäß der Erfindung umfaßt eine Strangpresse oder eine entsprechende Anordnung zur Erzeugung von mindestens einem Teigstrang sowie Mittel zur Beförderung der Teigstränge und zu deren Auslegung auf einem Förderer, geeigneterweise auf einem Förderband, und zwar als zopfähnliches Stranggebilde. Die Erfindung ist dadurch gekennzeichnet, daß die Mittel zum Flechten und Auslegen des Teigstranges aus mindestens einem, vorzugsweise um eine senkrechte Achse rotierenden, Führungstrichter oder ähnlichem Bauelement bestehen, dessen Ausgangsdüse etwas seitwärts gebogen ist und durch welchen die Teigstränge aus der Strangpresse durch Vermittlung

Teijo Teuvo Tapio Tamminen, Finnland

- 3 -

des Förderers geführt sind. Dadurch wird eine sehr
einfache Anordnung zum Flechten und Auslegen von
Teigsträngen geschaffen.

Nach einer Weiterbildung der Erfindung ist ein Teil
der Bandförderer zwischen der Strangpresse und dem
Führungstrichter so angeordnet, dass dieser in Querrichtung bezüglich der Förderungsrichtung hin- und
hergehende Bewegung ausführt, und zwar zum Querwalzen der Teigstränge zwischen mindestens einem
Paar der genannten Bandförderer, zwecks Bearbeitung
und Verbesserung der Massgenauigkeit sowie der Oberflächengüte der Teigstränge.

Nach einem weiteren Kennzeichen der Erfindung ist auf
dem von der Strangpresse wegführenden Förderband ein
Paar von Walzen angeordnet, welche bezüglich der
Förderrichtung in geneigter Stellung angebracht sind.
Durch diese Walzen werden die Teigstränge etwas seitwärts aus der Mittellinie und etwas weiter aus einander geführt.

Gemäß einer Weiterbildung sind im Zusammenhang mit
diesen Führungswalzen Mittel zum Bestreuen der Teigstränge mit Mehl vorgesehen.

Gemäß einer Weiterbildung können die Geschwindigkeiten
der Förderbänder stufenlos geregelt werden.

Auch ist nach einer zusätzlichen Weiterbildung die
Höhendifferenz zwischen den Förderpaaren, die das
Querwalzen der Teigstränge bewirken, stufenlos regelbar.

Teijo Teuvo Tapio Tamminen

- 4 -

Durch den Gedanken der Erfindung wird die Maschine einfacher, betriebssicherer und wirksamer als die bekannten Maschinen der eingangs genannten Art.

Eine Ausführungsform der Erfindung wird in der folgenden Beschreibung unter Bezugnahme auf die Zeichnung näher erläutert. Es zeigen:

Fig. 1 ein Ausführungsbeispiel der erfindunggemässen Maschine, in schematischer Seitenansicht,

Fig. 2 die Maschine von Fig. 1 in Ansicht von oben,

Fig. 3 eine einen Bestandteil der Maschine nach Fig. 1 und 2 bildende Flecht- und Auslegeeinrichtung für Teigstränge sowie einen Querförderer vor der Maschine, in Vorderansicht,

Fig. 4 die Flecht- und Auslegeeinrichtung für Teigstränge in einem gegenüber Fig. 3 etwas grösseren Masstab, in Vorderansicht,

Fig. 5 die Flecht- und Auslegeeinrichtung in schematischer Ansicht von oben.

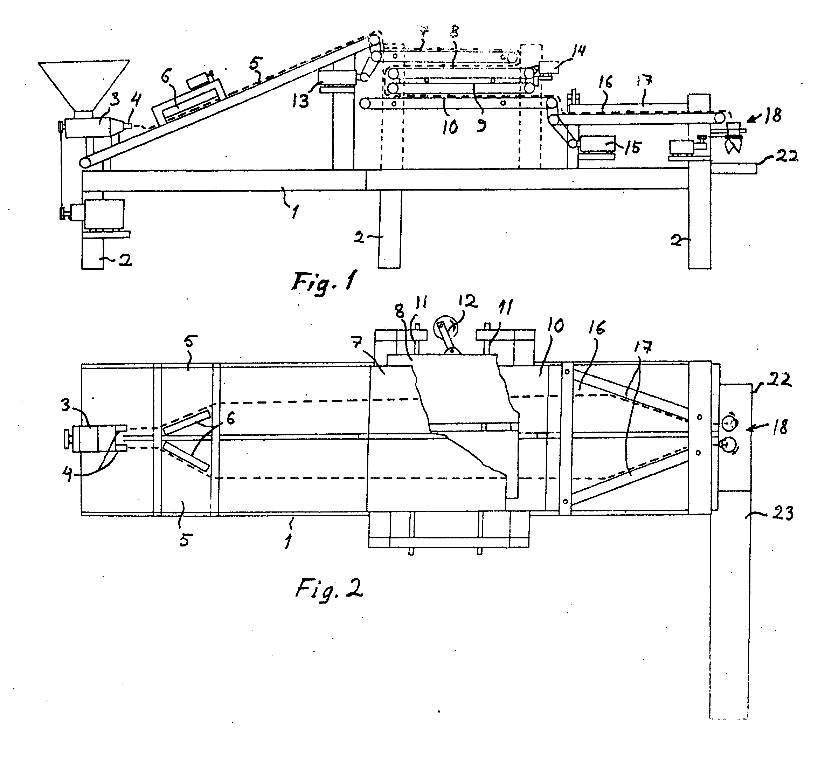

Die Maschine nach Fig. 1 und 2 weist ein z.B. aus Stahlprofilen zusammengebautes langgestrecktes Gestell 1 mit Beinen 2 auf, so daß sie auf dem Fussboden eines Arbeitsraumes aufgestellt werden kann. An dem linken Ende der Maschine ist eine an sich bekannte Teigstrangpresse 3 angebracht, welche mit

Teijo Teuvo Tapio Tamminen, Finnland

- 5 -

Düsen 4 zur Zuführung zweier oder mehrerer Teigstränge- versehen ist. Aus den Düsen 4 werden die Teigstränge auf ein Paar sich nach vorwärts oben bewegender Förderbänder 5 abgelegt. Auf der Oberseite der Förderbänder 5 ist ein Paar von in etwas geneigter Stellung zur der Bewegungsrichtung eingestellten Walzen 6 vorgesehen, um die Teigstränge zu beiden Seiten der Mittellinie auseinander zu führen. In Verbindung mit den Walzen 6 können auch Elemente zur Bestreuung der Teigstränge mit Mehl vorgesehen sein, um das Ankleben der Teigstränge auf dem Förderband zu verhindern. Von dem Förderer 5 werden die Teigstränge einem Querwalzteil zugeführt, wobei sie sich zuerst auf einem oberen Förderband 7 vorwärts bewegen, dann von hier auf ein unteres Förderband 8 geführt werden und sich zwischen dem oberen und unteren Förderband 7 und 8 gemäß der unterbrochenen Linie von Fig. 1 um eine Strecke rückwärts bewegen. Aus dem Förderband 8 werden die Teigstränge auf ein unterstes Förderband 10 gelegt, worauf sie sich wieder vorwärts in Längsrichtung der Maschine zwischen diesem und einem oberen Förderband bewegen. Gemäß der Erfindung sind die beiden Zwischenförderbänder 8 und 9 so angeordnet, daß sie mittels eines Kurbeltriebes 12 oder eines entsprechenden Elements eine stetige hin- und hergehende Querbewegung bezüglich der Längsrichtung der Maschine auf Querführungen 11 ausführen.

Der Zweck des Querwalzteiles ist die Bearbeitung und Umformung der Teigstränge, um eine bessere Struktur und auch eine bessere Massgenauigkeit der Teigstränge zu erreichen. Unter den Förderbändern 7, 8, 9, 10

Teijo Teuvo Tapio Tamminen, Finnland

- 6 -

sind Stahl- oder Kunstharzplatten (nicht gezeigt) als Stützflächen angebracht, wobei sich die Bänder während des Querwalzens auf diesen Stützflächen abstützen und gleiten können. Die Förderbänder sind aus einem geeigneten Textil- oder Plastikmaterial hergestellt. Die Geschwindigkeiten der Förderbänder sind vorzugsweise stufenlos einstellbar, z.B. durch Verwendung von an sich bekannten, stufenlos regelbaren Elektromotoren oder sogenannten Variatoren, die mit Elektromotoren zusammengebaut sein können. In Fig. 1 sind Motoren 13, 14, 15 für die Förderbänder dargestellt. Die Geschwindigkeiten der Förderer 7 und 8 sollen gleich sein, da die Teigstränge zwischen den Bändern mitgeführt werden. Die Geschwindigkeiten der Förderbänder 9 und 10 sind untereinander auch gleich, jedoch etwas grösser als die Geschwindigkeiten der Förderer 7, 8, da die Teigstränge sich durch das Querwalzen etwas dehnen.

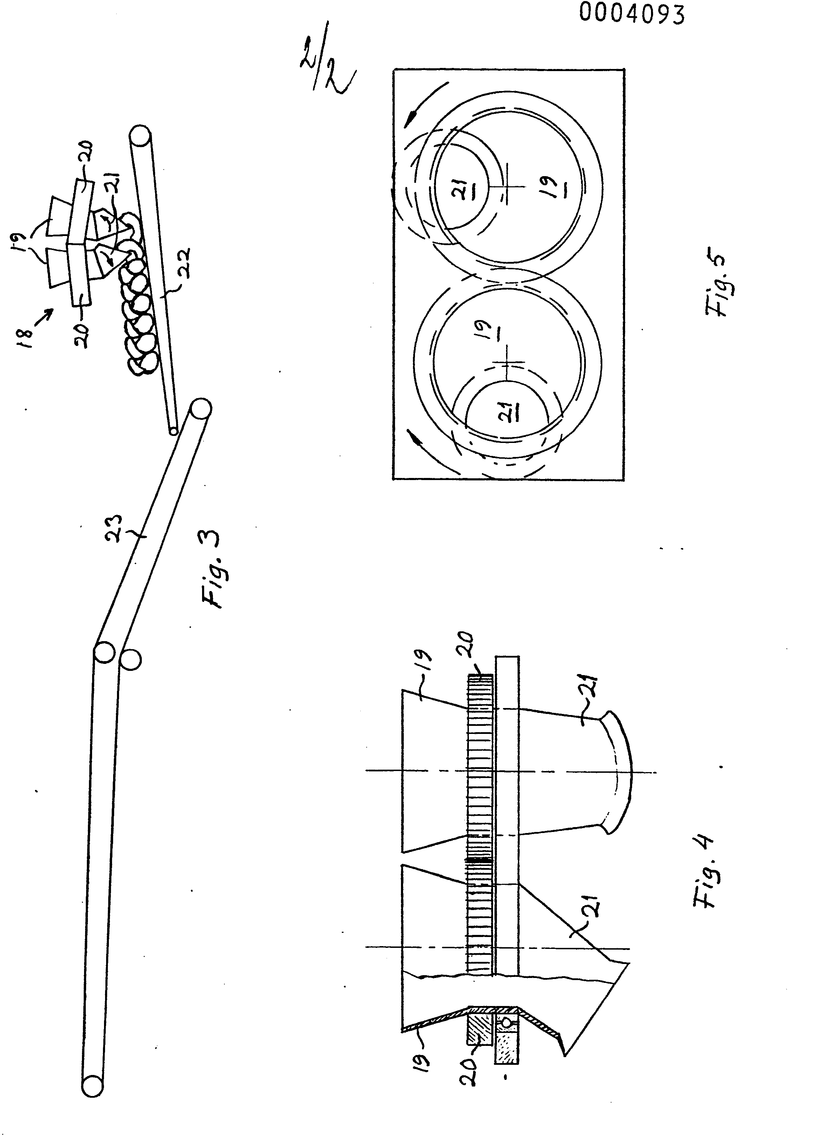

Aus dem Förderer 10 werden die Teigstränge in ihrem auf einen Endquerschnitt gewalzten Zustand auf einen Vorschubförderer 16 gelegt, wo sie sich durch Einwirkung einer Führungseinrichtung 17 etwas näher zueinander bewegen; die Teigstränge gelangen zu einer Flechtvorrichtung 18, wo sie in rotierende Führungstrichter 19 eingeführt werden. Die Trichter 19 sind miteinander durch Zahnräder 20 von gleichem Durchmesser gekuppelt (Fig. 3, 4, 5), wobei sie mit gleich grosser Geschwindigkeit in entgegengesetzter Richtung rotieren. Die Führungsbohrung der Trichter 19 ist gegenüber dem Durchmesser der Teigstränge verhältnismässig weit bemessen, wobei die Stränge leicht durch die Trichterbohrungen geführt

Teijo Teuvo Tapio Tamminen, Finnland

- 7 -

werden können. Auslassdüsen 21 an den unteren Enden der Trichter sind etwas seitwärts geneigt, wobei während der Rotation der Trichter und der Bewegung eines Auslegeförderbandes 22 unterhalb der Trichter die Teigstränge in stetiger Schraubenschlingform auf dem Förderband ausgelegt werden. Wenn die etwas seitwärts gegen das Unterteil geneigten Düsen 21 mit etwa 90$^o$ Phasendifferenz rotieren, werden die aus den Düsen 21 auslaufenden Teigstränge in stetiger Schlingenform fugenweise ineinander geführt, wobei ein Gebilde ähnlich einem geflochtenen Zopf entsteht. Die Form des Zopfes, wie Breite und Höhe sowie Dichte der Schlingen im Zopf kann durch Veränderung des Verhältnisses zwischen der Rotationsgeschwindigkeit der Trichter und der Geschwindigkeit des Auslegeförderers eingestellt werden. Die Form des Zopfes kann durch Verdrehung der ganzen Auslegeeinrichtung breiter oder schmaler eingestellt werden, so dass die Rotationsachsen der Trichter 19 in Projektion auf die Längsrichtung des Förderers 22 weiter entfernt oder näher beisammen liegen.

Der Auslegeförderer 22 ist vorzugsweise etwas vornüber geneigt, und dessen Geschwindigkeit ist infolge der Veränderung der Teigstränge zur Schraubenform wesentlich geringer als diejenige des Förderers 16. Ein folgender Förderer 23 dient zur Weiterbeförderung des fertigen Zopfes gemäß nachfolgenden Arbeitsgängen, wie Trennung in Stücke bestimmter Länge, Gärung, Backen usw. Die Geschwindigkeit des Förderers 23 ist vorzugsweise geringer als diejenige des vorherigen Förderers 22, um eine Verdichtung des Zopfes in Längsrichtung zu erreichen.

Teijo Teuvo Tapio Tamminen, Finnland

- *8* -

Bei der erfindungsgemäßen Maschine können auch
Weissbrotzöpfe aus mehr als zwei Teigsträngen in
entsprechender Weise hergestellt werden.

Die Teigstränge können auch durch mehrere getrennte,
nebeneinander angeordnete Trichter geführt werden,
wobei mehrere schraubenschlingenförmige Teigstränge
auf den Auslegeförderer getrennt voneinander ausgelegt und dann aus diesen Teigsträngen z.B. Brezeln
durch Trennen der einzelnen Schlingen hergestellt
werden können.

Patentanwalt
Dr. Helmut Späth
8200 Rosenheim / Obb.
Max-Josefs-Platz 6
Deutschland

Teijo Teuvo Tapio Tamminen, Julkujärvi, 39160 Ylöjärvi,
Finnland

-------------------------------------------------------------

Maschine zum Flechten und Auslegen von zopfartigen
Weissbrotgebäcken

-------------------------------------------------------------

## Patentansprüche

1. Maschine zur Herstellung von Backprodukten, insbesondere von zopfähnlichem, geflochtenem Weissbrotgebäck, mit einer Strangpresse oder einem entsprechenden Element zur Erzeugung von mindestens einem Teigstrang und mit Elementen zum Fördern, Flechten und Auslegen des Teigstranges in geflochtener Form auf einem Förderer, gekennzeichnet durch mindestens einen um eine vorzugsweise senkrechte Achse rotierenden Führungstrichter (19) mit einer Auslassdüse (21), die etwas seitwärts gebogen ist und durch welche der Teigstrang aus der Strangpresse (3) mittels der Förderer (5,7,8,9,10,17) geführt ist.

2. Die Maschine nach Anspruch 1, dadurch gekennzeichnet, daß ein Teil (8,9) der Förderer (5,7,8,9,10,17) zu-

0004093

Teijo Teuvo Tapio Tamminen, Finnland

- 2 -

sätzlich zur Ausführung einer Förderbewegung in Längsrichtung auch zur Ausführung einer stetigen hin- und hergehenden Querbewegung ausgebildet ist, um die Teigstränge zwischen den Förderern (7,8 und 9,10) querzuwalzen, zu bearbeiten und die Massgenauigkeit zu verbessern.

3. Maschine nach Anspruch 1 oder 2, dadurch gekennzeichnet, daß auf dem ersten Förderer (5) Walzen (6) zur Verschiebung der Teigstränge von der Mittellinie des Förderers (5) weg vorgesehen sind.

4. Maschine nach einem der Ansprüche 1-3, dadurch gekennzeichnet, daß in Verbindung mit den Walzen (6) Elemente zum Bestreuen der Teigstränge mit Mehl vorgesehen sind.

5. Maschine nach einem der Ansprüche 2-4, dadurch gekennzeichnet, daß die Höheneinstellung der Förderer (7,8,9,10) verstellbar ist.

6. Maschine nach Anspruch 1, dadurch gekennzeichnet, daß die Führungstrichter (19) zum Auslegen der Teigstränge in fugenweise ineinander greifenden Schraubenschlingen auf den darunter befindlichen Förderer (2) ausgebildet sind, entsprechend der Gestalt eines geflochtenen zopfähnlichen Weissbrotgebäckes.

7. Maschine nach Anspruch 6, dadurch gekennzeichnet, daß der Förderer (22) etwas vornüber geneigt ist.

8. Maschine nach den Ansprüchen 6 und 7, dadurch gekennzeichnet, daß zur Aufnahme des aus dem Förderer

Teijo Teuvo Tapio Tamminen, Finnland

- 3 -

(22) austretenden Zopfes ein Förderer (23) mit etwas kleinerer Bandgeschwindigkeit als diejenige des vorgeordneten Förderers (22) vorgesehen ist.

9.    Maschine nach den Ansprüchen 1-5, dadurch gekennzeichnet, daß die Geschwindigkeit der Förderer (5,6,7,8,9,10,17,22,23) stufenlos verstellbar ist.

Fig. 1

Fig. 2

0004093

Fig. 3

Fig. 4

Fig. 5

2/2

0004093

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | GB - A - 864 185 (PERKINS)<br>* Seite 2, Zeilen 81-123; Figur 2 *<br><br>-- | 1 |
| | DE - A - 2 210 845 (DRUCKMILLER)<br>* Seite 5, Zeilen 7-28; Figur 1 *<br><br>-- | 1,5 |
| A | DE - C - 452 211 (LEUKERT)<br>* Seite 3, Zeilen 39-49; Figur 6 *<br><br>---- | 1 |

**KLASSIFIKATION DER ANMELDUNG (Int.Cl.²)**

A 21 C 3/08
B 29 C 17/00

**RECHERCHIERTE SACHGEBIETE (Int. Cl.²)**

A 21 C

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-06-1979 | VROMMAN |

EPA form 1503.1 06.78